# EUROPEAN PATENT APPLICATION

(11) **EP 4 723 021 A1**
(43) Date of publication of application: **08.04.2026**
(21) Application number: 23939665.8
(22) Date of filing: 31.05.2023
(51) Int. Cl.: G06Q 50/00, A24F 40/60, A24F 40/65

(54) **INFORMATION PROCESSING DEVICE, INFORMATION PROCESSING METHOD, AND INFORMATION PROCESSING PROGRAM**

(71) Applicant: Japan Tobacco Inc., Tokyo 105-6927 (JP)
(72) Inventor: YAMAMOTO, Yuka, Tokyo 130-8603 (JP)
(74) Representative: Hoffmann Eitle
(86) International application number: PCT/JP2023/020351
(87) International publication number: WO 2024/247190

(57) **Abstract**

A server (300) performs processing to: acquire smoking characteristics information indicating smoking characteristics of respective users of a plurality of inhalation devices (100) each configured to be capable of generating an aerosol, calculate a similarity relating to the smoking characteristics between a user of one (100) of the plurality of inhalation devices (100) and a user of another inhalation device (100), based on the smoking characteristics information, and group together the user of said one inhalation device and the user of said other inhalation device, based on the similarity.

## Description

### TECHNICAL FIELD

The present disclosure relates to an information processing device, an information processing method, and an information processing program.

### BACKGROUND ART

Inhalers that generate an aerosol with added flavor components and allow a user to inhale the generated aerosol, for example, are conventionally known. Furthermore, recent years have also seen inhalers which communicate with an external device. For example, PTL 1 below discloses technology in which information indicating smoking being in progress, or a situation before the start/after the end of smoking, is sent from an electronic cigarette to a user terminal.

### CITATION LIST

### PATENT LITERATURE

PTL 1: WO 2015/161402 A1

### SUMMARY OF INVENTION

### TECHNICAL PROBLEM

There is a need to group together (in other words, match) users having similar smoking characteristics, for reasons of promoting communication among users of inhalation devices and implementing effective promotional activities that take account of user smoking characteristics, etc., for example. However, there is a problem with the conventional technology in that it is difficult to group together users having similar smoking characteristics.

The present disclosure provides an information processing device, an information processing method, and an information processing program enabling users having similar smoking characteristics to be grouped together.

### SOLUTION TO PROBLEM

One aspect of the present disclosure is an information processing device comprising a control unit for performing processing to:
acquire smoking characteristics information indicating smoking characteristics of respective users of a plurality of inhalation devices each configured to be capable of generating an aerosol,
calculate a similarity relating to the smoking characteristics between a user of one of the plurality of inhalation devices and a user of another inhalation device, based on the smoking characteristics information, and
group together the user of said one inhalation device and the user of said other inhalation device, based on the similarity.

Furthermore, another aspect of the present disclosure is
an information processing method in which a computer performs processing to:
acquire smoking characteristics information indicating smoking characteristics of respective users of a plurality of inhalation devices each configured to be capable of generating an aerosol, calculate a similarity relating to the smoking characteristics between a user of one of the plurality of inhalation devices and a user of another inhalation device, based on the smoking characteristics information, and
group together the user of said one inhalation device and the user of said other inhalation device, based on the similarity.

Furthermore, another aspect of the present disclosure is
an information processing program which causes a computer to implement processing to:
acquire smoking characteristics information indicating smoking characteristics of respective users of a plurality of inhalation devices each configured to be capable of generating an aerosol, calculate a similarity relating to the smoking characteristics between a user of one of the plurality of inhalation devices and a user of another inhalation device, based on the smoking characteristics information, and
group together the user of said one inhalation device and the user of said other inhalation device, based on the similarity.

### ADVANTAGEOUS EFFECTS OF INVENTION

The present disclosure makes it possible to provide an information processing device, an information processing method, and an information processing program enabling users having similar smoking characteristics to be grouped together.

### BRIEF DESCRIPTION OF DRAWINGS

Fig. 1 shows a matching system 10.
Fig. 2A is a schematic diagram schematically showing an inhalation device 100A, constituting a first configuration example of an inhalation device 100.
Fig. 2B is a schematic diagram schematically showing an inhalation device 100B, constituting a second configuration example of an inhalation device 100.
Fig. 3 shows a log information table 30 in a memory unit 114.
Fig. 4 is a schematic diagram schematically showing a configuration example of a terminal device 200.
Fig. 5 shows smoking characteristics information 50.
Fig. 6 is a schematic diagram schematically showing a configuration example of a server 300.
Fig. 7 shows a user information table 70 in a memory unit 310 of the server 300.
Fig. 8 is a sequence diagram showing an example of operation of the matching system 10.
Fig. 9 is a flowchart showing an example of grouping processing.
Fig. 10 shows an example of similarity.
Fig. 11 shows an example of usage of the matching system 10.
Fig. 12 shows another example of the smoking characteristics information.

### DESCRIPTION OF EMBODIMENTS

An embodiment of the information processing device, information processing method, and information processing program of the present disclosure will be described in detail below with reference to the drawings. The drawings shall be viewed in the orientation of the reference signs. It should be noted that the following embodiments do not limit the invention described in the claims and not all combinations of features described in the embodiments are essential to the invention. Furthermore, two or more of the plurality of features described in the embodiments may be combined in any way. Furthermore, hereinafter, identical or similar elements may be assigned identical or similar reference signs, and descriptions thereof may be omitted or simplified as appropriate.

### 1. Matching system

An example of a matching system comprising a server constituting an example of the information processing device of the present disclosure will be described first of all.

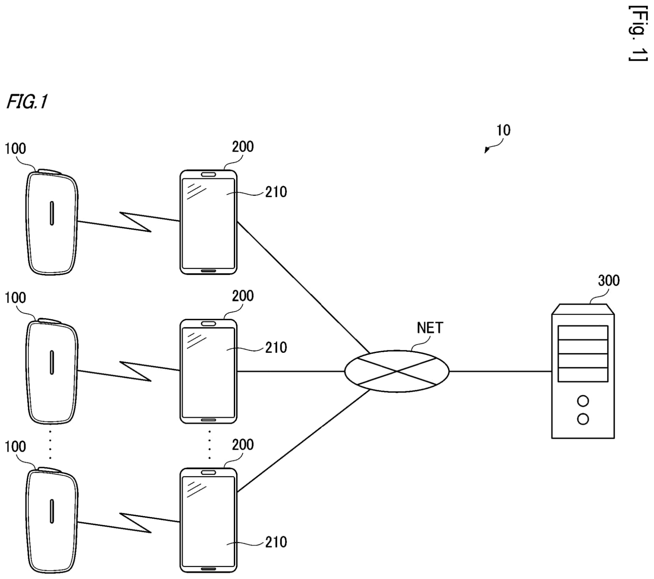

Fig. 1 shows a matching system 10. As shown in fig. 1, the matching system 10 comprises: a plurality of inhalation devices 100 each used by a different user; terminal devices 200 corresponding to each of the plurality of inhalation devices 100; and a server 300 constituting an example of the information processing device of the present disclosure.

The corresponding inhalation devices 100 and terminal devices 200 in the matching system 10 are provided so as to be capable of communicating with each other. Wi-Fi (registered trademark), Bluetooth (registered trademark), Bluetooth Low Energy (BLE) (registered trademark), Near-Field Communication (NFC), Low Power Wide Area (LPWA), etc. may be used for communication between the inhalation device 100 and the terminal device 200. Furthermore, the inhalation device 100 and the terminal device 200 may be connected by wire.

Furthermore, each of the terminal devices 200 and the server 300 are provided so as to be capable of communicating with each other via a network NET in the matching system 10. The network NET may be, for example, a mobile communication network, but is not limited thereto, and may be the Internet, a Wide Area Network (WAN), a LAN (Local Area Network) including Wi-Fi, or the like.

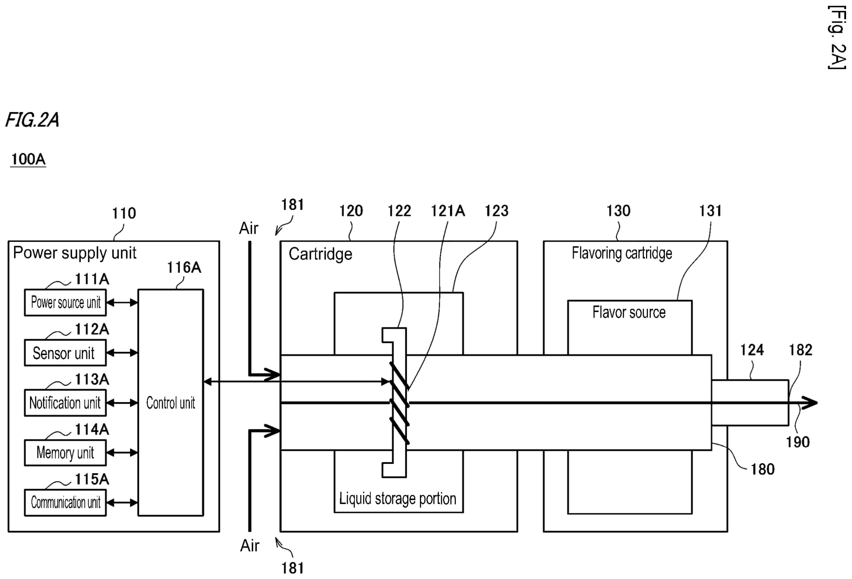

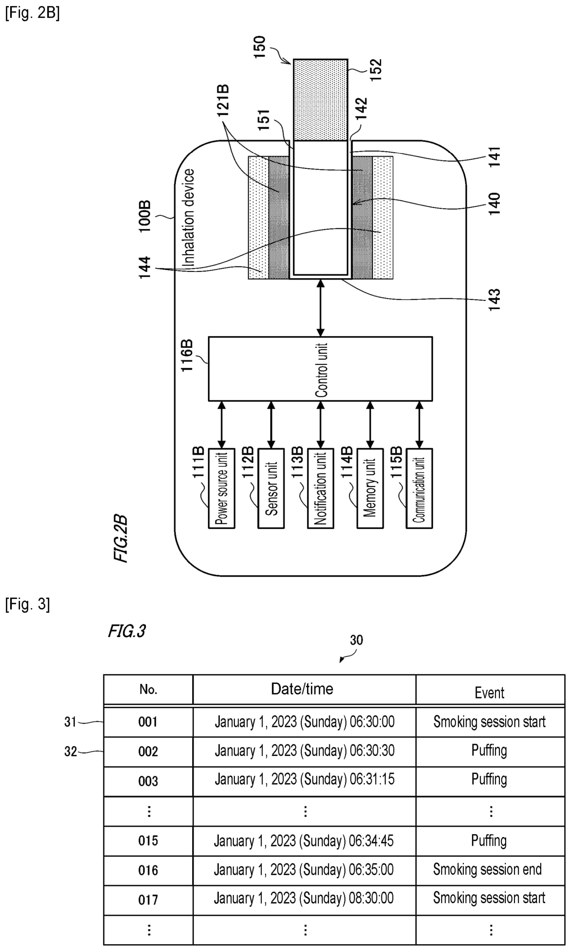

The inhalation device 100 is a device that generates a substance to be inhaled by a user and delivers the generated substance to the user in an inhalable manner. Hereinafter, the substance generated by the inhalation device 100 will be described as being an aerosol. Alternatively, the substance generated by the inhalation device 100 may be a gas. A configuration example of the inhalation device 100 will be described later with the aid of fig. 2A and 2B.

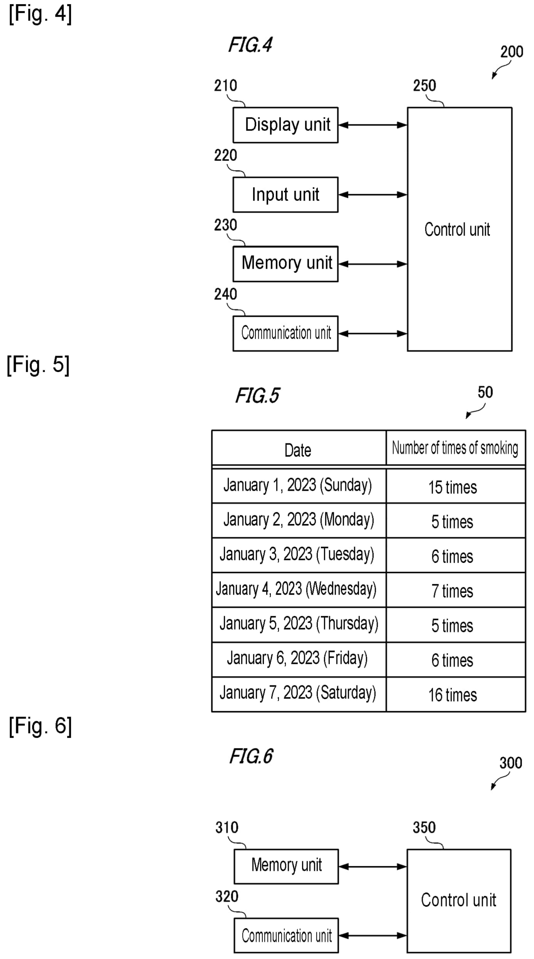

The terminal device 200 is a computer which comprises a display unit 210 capable of displaying information, and is used by the user of the corresponding inhalation device 100. A smartphone, tablet terminal, PC (personal computer), or wearable terminal (e.g., a smart watch), etc. may be used as the terminal device 200. Hereinafter, the terminal device 200 will be described as a smartphone. A configuration example of the terminal device 200 will be described later with the aid of fig. 4.

The server 300 is a computer managed by a manufacturer of the inhalation device 100, for example, and is configured to be capable of sending and receiving predetermined information to and from each of the terminal devices 200 via the network NET. Note that the server 300 may be a virtual server (cloud server) realized in a cloud computing service, or may be a physical server realized as a single device. A configuration example of the server 300 will be described later with the aid of fig. 6.

### 2. Inhalation device

### 2-1. First configuration example of inhalation device

Fig. 2A is a schematic diagram schematically showing an inhalation device 100A, constituting a first configuration example of the inhalation device 100. As shown in fig. 2A, the inhalation device 100A of this example comprises a power supply unit 110, a cartridge 120, and a flavoring cartridge 130. The power supply unit 110 comprises a power source unit 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 includes a flavor source 131 and a mouthpiece 124. An air flow path 180 is formed in the cartridge 120 and the flavoring cartridge 130.

The power source unit 111A stores electrical power. The power source unit 111A then supplies the electrical power to each component of the inhalation device 100A in accordance with control performed by the control unit 116A. The power source unit 111A may be configured, for example, by a rechargeable battery such as a lithium ion secondary battery.

The sensor unit 112A acquires various types of information relating to the inhalation device 100A. The sensor unit 112A is configured by, for example, a pressure sensor such as a capacitor microphone, a flow rate sensor or a temperature sensor, etc., and acquires values associated with inhalation by a user.

As an example, the sensor unit 112A may include a pressure sensor (also referred to as a "puff sensor") for detecting a change in pressure (also referred to hereinafter as "internal pressure") in the inhalation device 100 caused by inhalation by the user. As another example, the sensor unit 112A may include a flow sensor for detecting a flow rate caused by inhalation by the user (hereinafter simply referred to as "flow rate"). In addition, as another example, the sensor unit 112A may include a temperature sensor (also referred to as a "puff thermistor") for detecting the temperature of the heating unit 121A or the temperature around the heating unit 121A.

Furthermore, the sensor unit 112A may further comprise an input device, such as an operation button or a switch, for accepting input of information from the user. As an example, the sensor unit 112A may include an operation button serving as the input device that accepts a heating start operation, which will be described later.

The notification unit 113A notifies the user of information. The notification unit 113A may be configured by a light-emitting device which emits light, a display device which displays images, a sound output device which outputs sound, or a vibration device which vibrates, etc., for example.

The memory unit 114A stores various information (e.g., programs and data) for operation of the inhalation device 100A. The memory unit 114A may be configured by a non-volatile storage medium such as a flash memory, for example. As an example, the memory unit 114A stores usage history information indicating a history of usage of the inhalation device 100A by the user. An example of the usage history information will be described later with the aid of fig. 3.

The communication unit 115A is a communication interface capable of performing communication conforming to any wired or wireless communication standard. Examples of communication standards that may be used include standards employing Wi-Fi, Bluetooth, BLE, NFC, or LPWA, etc. The communication unit 115A communicates with a communication unit 240 of the terminal device 200 (described below), for example. The communication unit 115A may also communicate with other devices (e.g., the server 300) in addition to the terminal device 200.

The control unit 116A functions as an arithmetic processing device and a control device, and controls overall operation within the inhalation device 100A in accordance with various programs stored in the memory unit 114A, etc. The control unit 116A is realized by a CPU (central processing unit) or an electronic circuit such as a microprocessor, for example.

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include a tobacco-derived or non-tobacco-derived flavor component. If the inhalation device 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol. The heating unit 121A is formed by any material, such as a metal or polyimide, in any shape, such as coiled, film-like or blade-like. In the example shown in fig. 2A, the heating unit 121A is configured as a coil wrapped around the liquid guiding portion 122. When the heating unit 121A generates heat, the aerosol source held in the liquid guiding portion 122 is heated and atomized, generating the aerosol. The heating unit 121A generates heat when supplied with electricity from the power source unit 111A.

As an example, the supply of electricity to the heating unit 121A may be implemented when the sensor unit 112A has detected that the user has started inhaling and/or that predetermined information has been input. The supply of electricity to the heating unit 121A may then be stopped when the sensor unit 112A has detected that the user has finished inhaling and/or that predetermined information has been input.

Moreover, the heating unit 121A may be configured to generate an aerosol by means of vibration or induction heating. When the aerosol is generated by means of vibration, the inhalation device 100A comprises a vibration unit as the heating unit 121A. For example, the vibration unit is configured by a plate-shaped member comprising a piezoelectric ceramic functioning as an ultrasonic vibrator. When the vibration unit vibrates, the aerosol source which has been guided to a surface of the vibration unit by means of the liquid guiding portion 122 is then atomized by means of ultrasound generated as the vibration unit vibrates, thereby generating the aerosol.

Furthermore, when the aerosol is generated by means of induction heating, the inhalation device 100A comprises a susceptor and an electromagnetic induction source as the heating unit 121A. The susceptor generates heat by electromagnetic induction. The susceptor is made of an electrically conductive material, such as a metal. The susceptor is disposed adjacent to the liquid guiding portion 122. For example, the susceptor is formed by a metallic conducting wire and is wound around the liquid guiding portion 122. The electromagnetic induction source causes the susceptor to generate heat by electromagnetic induction. The electromagnetic induction source is formed by a coiled conducting wire, for example. The electromagnetic induction source generates a magnetic field when supplied with an AC current from the power source unit 111A. The electromagnetic induction source is disposed in a position where the susceptor lies over the generated magnetic field. Consequently, when a magnetic field is generated, eddy currents are generated in the susceptor, and Joule heat is generated. The aerosol source held in the liquid guiding portion 122 is then heated by this Joule heat and atomized, generating the aerosol.

The flavor source 131 is a component for imparting a flavor component to the aerosol. The flavor source 131 may include tobacco-derived or non-tobacco-derived flavor components. The flavor source 131 may, for example, be a tobacco-derived substance such as shredded tobacco, or a processed product obtained by molding a tobacco raw material into a granular form, a sheet form, or a powder form. Furthermore, the flavor source 131 may also include non-tobacco-derived materials made from plants other than tobacco (e.g., mint and herbs, etc.). As one example, the flavor source 131 may contain a flavoring component such as menthol. Furthermore, the flavor source 131 may be a stick-type member. When the inhalation device 100 is a medical inhaler, the flavor source 131 may contain a drug to be inhaled by a patient. It should be noted that the aerosol source 131 is not limited to a solid, and may equally be a liquid containing a flavor component, such as a polyhydric alcohol such as glycerol or propylene glycol, or water, for example. The flavor source 131 may furthermore contain a base, for example. The flavor source 131 may contain nicotine as a base, for example. Moreover, the flavor source may be disposed inside a container such as a capsule.

The flavoring cartridge 130 contains the flavor source 131. An air flow path is formed in the flavoring cartridge 130. Then, the flavor source 131 is further disposed part way along the air flow path. Consequently, when the mixed fluid of aerosol and air passes through the flavor source in the air flow path, the flavor component contained in the flavor source is added to the aerosol.

The air flow path 180 is a flow path for air to be inhaled by the user. The air flow path 180 has a tubular structure with an air inflow hole 181, which is an inlet for air into the air flow path 180, and an air outflow hole 182, which is an outlet for air from the air flow path 180, at the two ends thereof. Part way along the air flow path 180, the liquid guiding portion 122 is disposed on the upstream side (the side closer to the air inflow hole 181), and the flavor source 131 is disposed on the downstream side (the side closer to the air outflow hole 182). Air flowing in through the air inflow hole 181 as the user inhales is mixed with the aerosol generated by the heating unit 121A and transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the user's mouth during inhalation. The air outflow hole 182 is disposed in the mouthpiece 124. The user holds the mouthpiece 124 in their mouth and inhales, making it possible to draw the mixed fluid of aerosol and air into the oral cavity.

A configuration example of the inhalation device 100A has been described above. The inhalation device 100A is, of course, not limited to the configuration described above, and various configurations, such as those illustrated below by way of example, may be adopted.

As an example, the inhalation device 100A need not include the flavoring cartridge 130. In this case, the cartridge 120 is provided with the mouthpiece 124.

As another example, the inhalation device 100A may include a plurality of types of aerosol sources. A plurality of types of aerosol generated from the plurality of types of aerosol sources may be mixed within the air flow path 180 to cause a chemical reaction, thereby generating yet more other types of aerosol.

Furthermore, the means for atomizing the aerosol source is not limited to heating by the heating unit 121A. For example, the means for atomizing the aerosol source may be vibration atomization or induction heating.

### 2-2. Second configuration example of inhalation device

Fig. 2B is a schematic diagram schematically showing an inhalation device 100B, constituting a second configuration example of the inhalation device 100. As shown in fig. 2B, an inhalation device 100B according to this configuration example comprises a power source unit 111B, a sensor unit 112B, a notification unit 113B, a memory unit 114B, a communication unit 115B, a control unit 116B, a heating unit 121B, an accommodating portion 140, and a heat insulating portion 144.

The power source unit 111B, sensor unit 112B, notification unit 113B, memory unit 114B, communication unit 115B, and control unit 116B are each substantially the same as the corresponding component included in the inhalation device 100A described above.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines a columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the inhalation device 100B is a medical inhaler such as a nebulizer, the aerosol source may include a drug. The aerosol source may, for example, be a liquid such as water or a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow path, which is not illustrated in the drawings, and reaches the inside of the user's mouth together with the aerosol generated from the substrate portion 151.

In the example shown in fig. 2B, the heating unit 121B has a film-like form and is arranged so as to cover the outer circumference of the accommodating portion 140. Then, when the heating unit 121B generates heat, the substrate portion 151 of the stick-type substrate 150 is heated from the outer periphery, generating the aerosol.

The heat insulating portion 144 prevents heat transfer from the heating unit 121B to other components. For example, the heat insulating portion 144 is configured from a vacuum heat insulating material or an aerogel heat insulating material, or the like.

A configuration example of the inhalation device 100B has been described above. The inhalation device 100B is, of course, not limited to the configuration described above, and various configurations, such as those illustrated below by way of example, may be adopted.

As one example, the heating unit 121B may have a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may comprise an opening/closing mechanism such as a hinge for opening/closing part of a casing that forms the internal space 141. By opening/closing the casing, the accommodating portion 140 may then receive and grip the stick-type substrate 150 that has been inserted into the internal space 141. In this case, the heating unit 121B may be provided on the gripping part of the accommodating portion 140, and may heat the stick-type substrate 150 while pressing the same.

Furthermore, the means for atomizing the aerosol source is not limited to heating by the heating unit 121B. For example, the means for atomizing the aerosol source may be induction heating. In that case, the inhalation device 100B comprises at least an electromagnetic induction source such as a coil for generating a magnetic field, instead of the heating unit 121B. A susceptor which generates heat by means of induction heating may be provided in the inhalation device 100B, or may be contained in the stick-type substrate 150.

Furthermore, the inhalation device 100B may additionally include the heating unit 121A, the liquid guiding portion 122, the liquid storage portion 123, and the air flow path 180 according to the first configuration example, and the air flow path 180 may supply air to the internal space 141. In this case, the mixed fluid of the aerosol generated by the heating unit 121A and air flows into the internal space 141 and is further mixed with the aerosol generated by the heating unit 121B, and reaches the oral cavity of the user.

### 2-3. Example of operation of inhalation device

An example of operation of the inhalation device 100 of this embodiment (e.g., the inhalation device 100A or the inhalation device 100B) will be described next. The control unit 116 (e.g., the control unit 116A or the control unit 116B) of the inhalation device 100 causes an aerosol to be generated by the heating unit 121 (e.g., the heating unit 121A or the heating unit 121B) by supplying power to the heating unit 121 in response to a request for aerosol generation from the user, for example.

The aerosol generation request may be an operation to instruct the start of heating (also referred to below as a "heating start operation"), for example. As an example, the heating start operation may be pressing of a predetermined operation button (not depicted) provided on the inhalation device 100. As another example, the heating start operation may be insertion of the stick-type substrate 150 into the inhalation device 100, or drawing on the inhalation device 100 (also referred to below as "puffing").

Furthermore, the aerosol generation request is not limited to direct operation on the inhalation device 100, and may be, for example, reception of predetermined information from another device capable of communicating with the inhalation device 100, such as the terminal device 200. The control unit 116 may detect the aerosol generation request based on information acquired by means of the sensor unit 112 (e.g., the sensor unit 112A or the sensor unit 112B) or the communication unit 115 (e.g., the communication unit 115A or the communication unit 115B), for example.

The control unit 116 then causes an aerosol to be generated by appropriately supplying power to the heating unit 121 in a period until a predetermined time (e.g., 300 [sec]) has elapsed from when the aerosol generation request was detected, or until a predetermined number of puffs (e.g., 15 puffs) have been taken.

The period in which an aerosol is generated in the inhalation device 100, that is, the period until a predetermined time has elapsed from when the aerosol generation request was detected, or until a predetermined number of puffs have been taken will also be referred to below as a "smoking session". The number of times deemed to be smoking sessions will then also be referred to as a "number of times of smoking".

Furthermore, the control unit 116 appropriately stores, in the memory unit 114 (e.g., the memory unit 114A or the memory unit 114B), log information representing a history of usage of the inhalation device 100, as the inhalation device 100 is used by the user. The log information is information enabling the number of times of smoking in a predetermined period to be identified, for example. An example of the log information will be described below.

Fig. 3 shows a log information table 30 in the memory unit 114. As shown in fig. 3, the log information table 30 stores a record of log information (e.g., log information 31, 32) obtained by associating event numbers (illustrated by "No."), which indicate an order of occurrence of events that occurred in an inhalation device 100, with a date and time at which each event occurred and details of the event, for example. In this embodiment, the start of a smoking session, the end of a smoking session, and puffing are preset as events for the log information.

For example, the log information 31 shown in fig. 3 indicates that an event having the event number "001" was a "smoking session start" event which took place at a date and time of "January 1, 2023 (Sunday) at 06:30:00". Furthermore, the log information 32 indicates that an event having the event number "002" was a "puffing" event which took place at a date and time of "January 1, 2023 (Sunday) at 06:30:30". The control unit 116 may cause log information such as this to be appropriately stored in the log information table 30 in the memory unit 114, based on information acquired by the sensor unit 112 or the communication unit 115, for example.

The control unit 116 then sends the log information stored in the memory unit 114 to the terminal device 200 via the communication unit 115 at a predetermined timing. Here, for example, the control unit 116 sends to the terminal device 200 an inhalation device ID serving as an identifier for identifying the inhalation device 100 (i.e., the host device), attached to the log information.

There is no particular limitation as to the timing for sending the log information, but it is assumed to be every Sunday at 00:00 in this embodiment, as an example. Alternatively, the control unit 116 may send the log information when the user has performed a predetermined operation, for example. Furthermore, the control unit 116 may delete from the log information table 30 (i.e., the memory unit 114) log information which has been sent to the terminal device 200. This makes it possible to inhibit the limited storage area of the memory unit 114 from being compressed by the log information.

Moreover, information other than the information mentioned above may also be stored as the log information. For example, information indicating the number of puffs in each smoking session, a smoking time which is the temporal length of each smoking session, or an interval time which is the temporal length between smoking sessions may also be stored as the log information.

Furthermore, if the inhalation device 100 is the inhalation device 100A shown in fig. 2A, information indicating a date and time at which the cartridge 120 or the flavoring cartridge 130 was replaced may also be stored as the log information. Meanwhile, if the inhalation device 100 is the inhalation device 100B shown in fig. 2B, information indicating a date and time at which the stick-type substrate 150 was inserted or removed may also be stored as the log information.

### 3. Terminal device

### 3-1. Configuration example of terminal device

A configuration example of the terminal device 200 will be described next. Fig. 4 is a schematic diagram schematically showing a configuration example of the terminal device 200. As shown in fig. 4, the terminal device 200 includes a display unit 210, an input unit 220, a memory unit 230, a communication unit 240, and a control unit 250.

The display unit 210 displays various information (e.g., images and/or text) on the basis of control performed by the control unit 250. The display unit 210 is configured by a liquid crystal display or an OLED (organic light-emitting diode) display.

The input unit 220 is configured by an input device such as a touch panel, keyboard, or mouse, and accepts input of information (operational input) from a user. In this embodiment, the input unit 220 includes a touch panel integrally provided with the display serving as the display unit 210.

The memory unit 230 stores various information (e.g., programs and data) for operation of the terminal device 200. The memory unit 230 is configured by a non-volatile storage medium such as a flash memory, for example. As an example, the log information which the terminal device 200 has received from the inhalation device 100 may be stored in the memory unit 230. As another example, smoking characteristics information generated by the terminal device 200 on the basis of the log information may be stored in the memory unit 230 An example of smoking characteristics information will be described later with the aid of fig. 5.

The communication unit 240 is a communication interface capable of performing communication conforming to any wired or wireless communication standard. Examples of communication standards that may be used include standards employing Wi-Fi, Bluetooth, BLE, NFC, or LPWA, etc. The communication unit 240 communicates with the communication unit 115 of the inhalation device 100, for example. Furthermore, the communication unit 240 communicates with a communication unit 320 of the server 300 via the network NET.

The control unit 250 functions as an arithmetic processing device and a control device, and controls overall operation within the terminal device 200 in accordance with various programs stored in the memory unit 230, etc. The control unit 250 is realized by a CPU or an electronic circuit such as a microprocessor, for example.

### 3-2. Example of operation of terminal device

An example of operation of the terminal device 200 will be described next. The terminal device 200 acquires, by means of the communication unit 240, the log information sent from the inhalation device 100. On acquiring the log information, the terminal device 200 then generates smoking characteristics information indicating user smoking characteristics, based on this log information. Examples of smoking characteristics which may be cited here include: a smoking frequency, a manner of smoking (e.g., deep, slow draws, or many shallow draws), model of inhalation device 100, and brand of flavoring cartridge 130 or stick-type substrate 150, etc.

### (i.e., taste preference), or the like.

In this embodiment, the smoking characteristics information is assumed to include information indicating the number of times of smoking (i.e., the smoking frequency) of the user in a predetermined period, for example. Smoking characteristics information 50, which is an example of the smoking characteristics information of this embodiment, will be described below.

Fig. 5 shows the smoking characteristics information 50. As shown in fig. 5, the terminal device 200 generates the smoking characteristics information 50 indicating the number of times of smoking per day over the past one week (the most recent week in other words), for example, based on the log information received from the inhalation device 100. The terminal device 200 can generate smoking characteristics information 50 such as this by referencing information indicating a start date/time or end date/time of each smoking session in the log information received from the inhalation device 100, for example.

For example, the smoking characteristics information 50 shown in fig. 5 shows that the number of times of smoking on January 1, 2023 (Sunday) was 15 times, the number of times of smoking on January 2, 2023 (Monday) was 5 times, the number of times of smoking on January 3, 2023 (Tuesday) was 6 times, the number of times of smoking on January 4, 2023 (Wednesday) was 7 times, the number of times of smoking on January 5, 2023 (Thursday) was 5 times, the number of times of smoking on January 6, 2023 (Friday) was 6 times, and the number of times of smoking on January 7, 2023 (Saturday) was 16 times.

It should be noted that the smoking characteristics information in this embodiment is information indicating the number of times of smoking per day over the past one week, but is not limited thereto. For example, the smoking characteristics information may be information indicating the number of times of smoking in predetermined time slots (e.g., every hour from 00:00) for each day over the past one week. In this way, the smoking characteristics information may be information showing the user smoking characteristics (e.g., lifestyle rhythm) in more detail.

Furthermore, the period to which the smoking characteristics information relates is not limited to the past one week, and may be a longer period of the past one month or the past one year, for example. The smoking characteristics information may thus be information indicating user smoking characteristics averaged over a longer period.

### 4. Server

### 4-1. Configuration example of server

A configuration example of the server 300 will be described next. Fig. 6 is a schematic diagram schematically showing a configuration example of the server 300. As shown in fig. 6, the server 300 includes a memory unit 310, a communication unit 320, and a control unit 350.

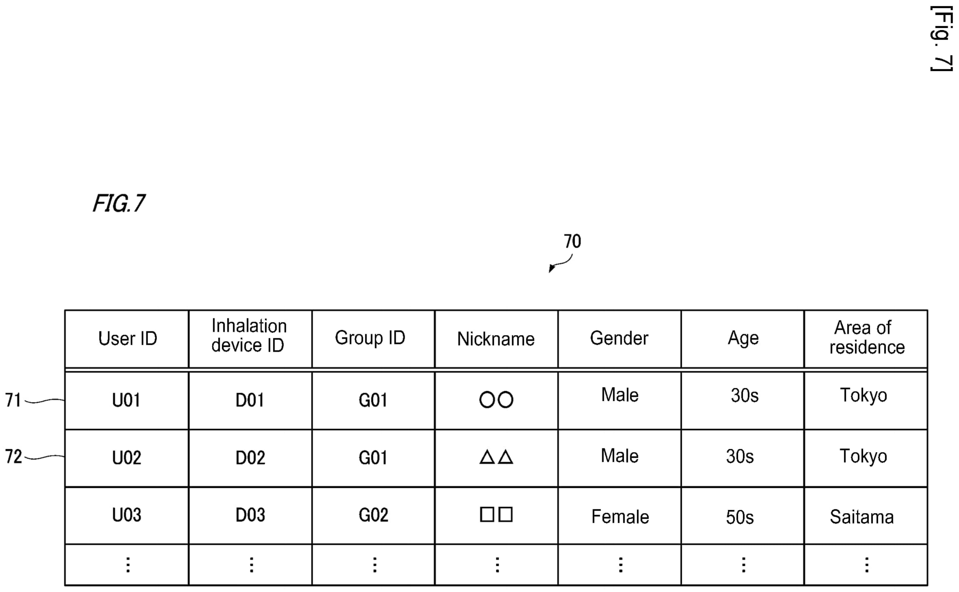

The memory unit 310 stores various information (e.g., programs and data) for operation of the server 300. The memory unit 310 is configured by a non-volatile storage medium such as a flash memory, for example. As an example, user information relating to respective users of the plurality of inhalation devices 100 included in the matching system 10 may be stored in the memory unit 310. An example of the user information will be described later with the aid of fig. 7. As another example, the memory unit 310 may store smoking characteristics information received by the server 300 from each of the terminal devices 200.

The communication unit 320 is a communication interface capable of performing communication conforming to any wired or wireless communication standard. Examples of communication standards that may be used include standards employing Wi-Fi, Bluetooth, BLE, NFC, or LPWA, etc. The communication unit 320 communicates with the communication unit 240 of the terminal device 200 via the network NET.

The control unit 350 functions as an arithmetic processing device and a control device, and controls overall operation within the server 300 in accordance with various programs stored in the memory unit 310, etc. The control unit 350 is realized by a CPU or an electronic circuit such as a microprocessor, for example. For example, operations of the server 300 (to be described later) are realized by means of the control unit 350 implementing various programs which are stored in the memory unit 310, etc.

### 4-2. User information table

Fig. 7 shows a user information table 70 in the memory unit 310 of the server 300. As shown in fig. 7, the user information table 70 stores a record of user information (e.g., user information 71, 72) in which a user ID serving as an identifier for identifying a user of each of the plurality of inhalation devices 100 included in the matching system 10 is associated with an inhalation device ID serving as an identifier for identifying the inhalation device 100 used by that user and attribute information representing attributes of that user.

Here, the attribute information includes information indicating each of a group ID, nickname, gender, age, and area of residence, for example. Here, the group ID is an identifier for identifying a group to which the user belongs in the matching system 10. A nickname is any string of characters preset by the user. Gender indicates whether the user is male or female. Age indicates the age of the user (e.g., the broad age group). The area of residence indicates the area where the user resides (e.g., the prefecture).

For example, the user information 71 shown in fig. 7 shows that the inhalation device ID for the inhalation device 100 used by a user having the user ID "U01" is "D01", the group ID of the group to which that user belongs is "G01", the user's nickname is "OO", the user's gender is "male", the user's age is "30s", and the user's area of residence is "Tokyo". Furthermore, the user information 72 shows that the inhalation device ID for the inhalation device 100 used by a user having the user ID "U02" is "D02", the group ID of the group to which that user belongs is "G01", the user's nickname is "ΔΔ", the user's gender is "male", the user's age is "30s", and the user's area of residence is "Tokyo".

### 5. Example of operation of matching system

An example of operation of the matching system 10 will be described next. For simplicity, the following description will cite the example of one inhalation device 100 and its corresponding terminal device 200 included in the matching system 10, but the same may also apply to other inhalation devices 100 and their corresponding terminal devices 200. That is to say, the "one inhalation device 100" may be any of the inhalation devices 100 included in the matching system 10. Furthermore, the user of this one inhalation device 100 will also be referred to below simply as "one user". The user of another inhalation device 100 will then also be referred to simply as the "other user".

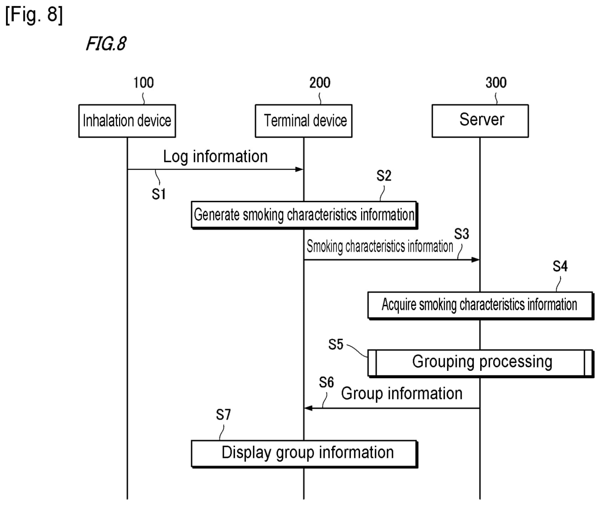

Fig. 8 is a sequence diagram showing an example of operation of the matching system 10. As shown in fig. 8, said one inhalation device 100 sends log information at a predetermined timing to the terminal device 200 corresponding to that inhalation device 100 (step S1). Here, the inhalation device 100 attaches its own inhalation device ID to the log information which is sent to the terminal device 200, for example.

The terminal device 200 which received the log information generates smoking characteristics information based on this log information (step S2). The terminal device 200 then sends the generated smoking characteristics information to the server 300 via the network NET (step S3). Here also, the inhalation device ID which was attached to the log information on which the smoking characteristics information was based is attached to the smoking characteristics information which is sent to the server 300 by the terminal device 200.

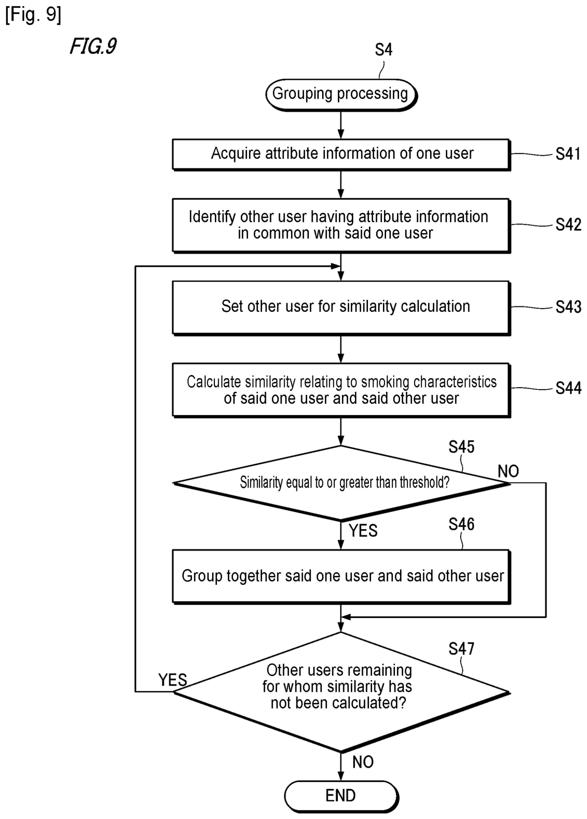

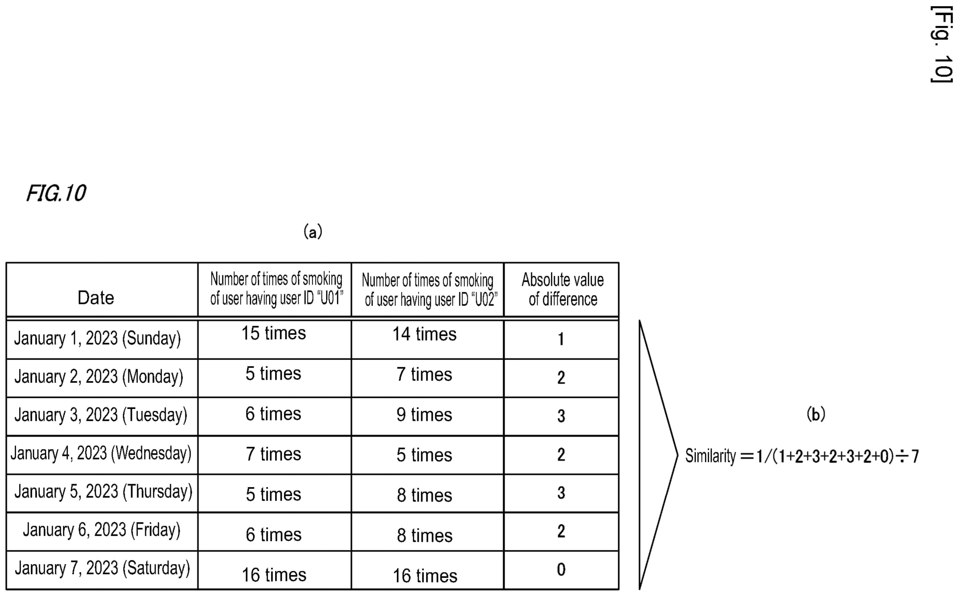

The server 300 receives smoking history information sent from the terminal device 200 and thereby acquires this smoking history information (step S4). Based on the acquired smoking history information, the server 300 then performs grouping processing to group together one user and another user (step S5). In the grouping processing, the server 300 calculates a similarity relating to the smoking characteristics of one user and another user, and groups together said one user and said other user based on this similarity; this will be described in detail later with the aid of fig. 9 and 10.

When said one user and said other user have been grouped together by means of the grouping processing, the server 300 then presents said one user with group information relating to a group to which said one user and said other user belong, for example.

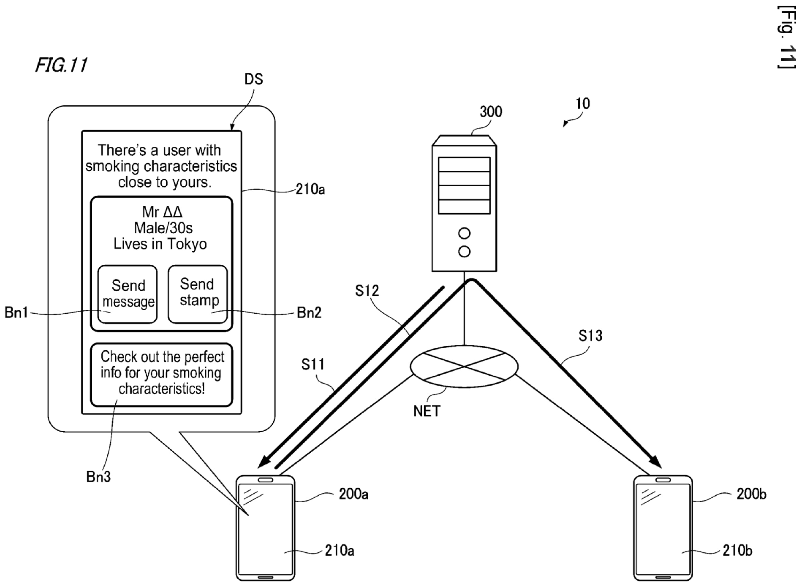

As an example, the server 300 sends the group information to the terminal device 200 corresponding to said one inhalation device 100 (step S6). The terminal device 200 having received the group information sent from the server 300 causes the display unit 210 to display a screen (e.g., the display screen DS shown in fig. 11) based on the group information received (step S7). This enables said one user to be presented with the group information relating to the group to which said user belongs.

Here, the group information includes information relating to another user belonging to the group to which said one user belongs, for example. This enables said one user to be presented with information relating to another user having similar smoking characteristics.

Furthermore, the information relating to said other user includes attribute information representing attributes of said other user, for example. This enables said one user to be presented with attribute information of another user having similar smoking characteristics.

Furthermore, the information relating to said other user may include information for said one user to accept a send request to send a message or an image to said other user. In this way, said one user can accept a send request to send a message or an image to said other user.

Furthermore, the group information may include information relating to an advertisement or coupon corresponding to the group to which said one user belongs. In this way, said one user can be presented with an advertisement or coupon corresponding to the group to which said user belongs. It should be noted that advertisements or coupons corresponding to each group are preset by the manager of the server 300 (i.e., the manufacturer of the inhalation device 100), or the like.

### 6. Grouping processing

An example of the grouping processing of step S5 will be described next. Fig. 9 is a flowchart showing an example of grouping processing.

As shown in fig. 9, in the grouping processing, the server 300 (e.g., the control unit 350) first of all acquires the attribute information of said one user by referring to the user information table 70 (step S41). As an example, when smoking characteristics information with the inhalation device ID "D01" attached has been acquired, the server 300 acquires, as the attribute information of said one user, attribute information of the user ID "U01" corresponding to the inhalation device ID "D01" in the user information table 70.

Next, the server 300 identifies another user having attribute information in common with said one user by referring to the user information table 70 (step S42). As an example, the server 300 identifies another user of common gender, age or area of residence with said one user. More specifically, if said one user has the user ID "U01", the server 300 identifies the user having the user ID "U02" as another user of common gender (i.e., male), age (i.e., 30s), or area of residence (i.e., Tokyo) with said one user. Furthermore, if there are multiple other users having common attribute information with said one user, the server 300 may identify these multiple other users.

Note that a condition used to identify other users (e.g., gender, age, or area of residence) is preset by the manager of the server 300, or similar, for example. Furthermore, one user may designate the condition used to identify other users.

Next, the server 300 sets one person among the other users identified by the processing of step S42 as another user for similarity calculation (step S43), and calculates the smoking characteristics similarity between said one user and said other user set for the similarity calculation (step S44).

Here, the similarity is an evaluation value representing proximity of smoking characteristics (e.g., smoking frequency) between the users, and in this embodiment, a higher similarity value indicates greater similarity in smoking characteristics. An example of the similarity of this embodiment will be described later with the aid of fig. 10. It should be noted that a smaller similarity value may equally indicate greater similarity in smoking characteristics (in other words, there is less deviation in smoking characteristics between users), in which case "equal to or greater than the threshold" should be read as "equal to or less than the threshold" in the description below, for example.

Next, the server 300 determines whether or not the similarity calculated by the processing of step S42 is equal to or greater than a threshold (step S45). The threshold used for the processing of step S45 is preset by the manager of the server 300, or the like, for example.

If the similarity is judged not to be equal to or greater than the threshold (step S45: NO), the server 300 advances to the processing of step S47 without any other processing. Meanwhile, if the similarity is judged to be equal to or greater than the threshold (step S45: YES), the server 300 groups together said one user and the other user set as the user for the similarity calculation (step S46).

As another example, the server 300 should set the same group ID as for said other user as attribute information of said one user in the user information table 70. More specifically, if the user having the user ID "U01" and the user having the user ID "U02" are grouped together, the server 300 should set a common group ID (e.g., the group ID "G01") in the attribute information corresponding to each of the user IDs "U01" and "U02".

Furthermore, if only the user having the user ID "U02" has been found so far as another user having common attribute information with the user having the user ID "U01", then the server 300 may group together the user having the user ID "U01" and the user having the user ID "U02" by directly associating the user ID "U02" with the user ID "U01".

Next, the server 300 determines whether or not there are other users remaining for whom similarity has not been calculated among the other users identified by the processing of step S42 (step S47). If there are judged to be other users remaining for whom similarity has not been calculated (step S47: YES), then the server 300 advances to the processing of step S43, sets one person among the other users for whom similarity has not been calculated as the user for the similarity calculation, and repeats the processing described above. If there are judged to be no other users remaining for whom similarity has not been calculated (step S47: NO), then the server 300 terminates the processing series shown in fig. 9.

As described above, the server 300 comprises the control unit 350 which performs processing to: acquire smoking characteristics information indicating smoking characteristics of respective users of the plurality of inhalation devices 100 each configured to be capable of generating an aerosol, calculate a similarity relating to the smoking characteristics between one user and another user based on the smoking characteristics information, and group together said one user and said other user based on the similarity. This allows users having similar smoking characteristics to be grouped together.

Furthermore, the control unit 350 identifies another user having attribute information in common with said one user by referring to the memory unit 310 (e.g., the user information table 70) which stores the attribute information of respective users of the plurality of inhalation devices 100, and calculates the similarity between said one user and the other user identified. This makes it possible to group together users having common attribute information and similar smoking characteristics. Furthermore, by this means, other users for whom similarity is to be calculated can be narrowed down to some extent by attribute information, and it is therefore possible to reduce the processing load on the control unit 350 as compared to when similarity is calculated for all other users.

Furthermore, the attribute information includes information indicating the gender, age, or area of residence of the user, for example. This enables grouping to take account of gender, age, or area of residence, meaning that users who might not only have similar smoking characteristics but also interests, preferences or values, etc. can be grouped together.

### 7. Similarity

An example of similarity will be described next. In this embodiment, similarity is an evaluation value representing proximity of the number of times of smoking of one user in a predetermined period and the number of times of smoking of another user in the predetermined period. By this means, users having close numbers of times of smoking in a predetermined period can be grouped together. Furthermore, the period for which similarity is calculated is taken is the past one week in this embodiment. By this means, users having close numbers of times of smoking in the past one week (the most recent number of times of smoking in other words) can be grouped together.

Fig. 10 shows an example of similarity. The example shown in fig. 10 is an exemplary case for calculating the similarity between the user having the user ID "U01" and the user having the user ID "U02".

When the similarity is calculated in the case of the example shown in fig. 10, the server 300 first of all calculates absolute values of differences in the number of times of smoking each day in the past one week for the user having the user ID "U01" and the user having the user ID "U02" (see (a) in fig. 10).

The server 300 then calculates, as the similarity, the reciprocal of the average of the calculated absolute values of the differences in the number of times of smoking each day (see (b) in fig. 10). By this means, the similarity can be obtained as an evaluation value representing proximity of the number of times of smoking over the past one week of one user (the user having the user ID "U01" in the example described here) and the number of times of smoking over the past one week of another user (the user having the user ID "U02" in the example described here). Note that if the number of times of smoking of one user and the number of times of smoking of the other user are exactly the same every day so that the total of the absolute values of the differences in the number of times of smoking each day is 0, the server 300 may set a predetermined upper limit value for the similarity between one user and another user, for example.

Moreover, the reciprocal of the average of the absolute values of the differences in the number of times of smoking each day was used as the similarity in the example described here, but this is not limiting. For example, the average of the absolute values of the differences in the number of times of smoking each day may be used as the similarity, in which case a smaller similarity value indicates greater similarity in smoking characteristics. Furthermore, the period for which similarity is calculated was the past one week in this embodiment, but is not limited thereto. The period for which similarity is calculated may be set, as appropriate, by the manager of the server 300, or the like.

### 8. Example of usage of matching system

An example of usage of the matching system 10 will be described next. Fig. 11 shows an example of usage of the matching system 10. The example described here relates to a case in which the user having the user ID "U01" and the user having the user ID "U02" have been grouped together in a group having the group ID "G01" by means of the grouping processing.

In fig. 11, a terminal device 200a constitutes a terminal device 200 corresponding to an inhalation device 100 having the inhalation device ID "D01" used by the user having the user ID "U01". A display unit 210a then constitutes a display unit 210 of the terminal device 200a. Furthermore, a terminal device 200b constitutes a terminal device 200 corresponding to an inhalation device 100 having the inhalation device ID "D02" used by the user having the user ID "U02". A display unit 210b then constitutes a display unit 210 of the terminal device 200b.

When the user having the user ID "U01" and the user having the user ID "U02" have been grouped together in the group having the group ID "G01", the server 300 sends, to the terminal device 200a, group information including information relating to the user having the user ID "U02" and information relating to an advertisement or coupon corresponding to the group having the group ID "G01" (see the arrow S11 in fig. 11), for example.

Here, the information relating to the user having the user ID "U02" includes, for example, attribute information of the user having the user ID "U02", and information for accepting a send request to send a message or an image (e.g., a communicative image known as a "stamp") to the user having the user ID "U02".

The terminal 200a having received the group information sent from the server 300 displays the display screen DS on the display unit 210 on the basis of this group information. The display screen DS displays the attribute information (e.g., nickname, gender, age, or area of residence) of the user having the user ID "U02" as a user having smoking characteristics close to those of the user having the user ID "U01".

Furthermore, the display screen DS displays a message send button Bn1 for accepting a send request to send a message to the user having the user ID "U02", and a stamp send button Bn2 for accepting a send request to send an image to the user having the user ID "U02".

The user of the terminal device 200a (i.e., the user having the user ID "U01") can consider whether to send a message or an image to the user having the user ID "U02" by referring to the attribute information, etc. of the user having the user ID "U02" displayed on the display screen DS, for example.

If the user of the terminal device 200a then wishes to send a message to the user having the user ID "U02", the user of the terminal device 200a can send the desired message to the terminal device 200b via the server 300 by operating (e.g., tapping) the message send button Bn1 (see the arrow S12 in fig. 11). Similarly, if the user of the terminal device 200a wishes to send an image to the user having the user ID "U02", the user of the terminal device 200a can send the desired image to the terminal device 200b via the server 300 by operating the stamp send button Bn2.

The display screen DS furthermore displays a display button Bn3 for accepting a display request to display an advertisement or coupon corresponding to the group having the group ID "G01". The user of the terminal device 200a can cause the display unit 210a to display this advertisement or coupon corresponding to the group having the group ID "G01" in order for said user to check said advertisement or coupon, by operating (e.g., tapping) the display button Bn3.

Furthermore, the server 300 likewise also sends this group information to the terminal 200b, although this is not depicted or described in detail. The group information sent to the terminal device 200b includes information relating to the user having the user ID "U01", and information relating to an advertisement or coupon corresponding to the group having the group ID "G01", for example. Here, the information relating to the user having the user ID "U01" includes attribute information of the user having the user ID "U01", and information for accepting a send request to send a message or an image to the user having the user ID "U01".

Accordingly, the terminal device 200b displays on the display unit 210b a display screen including, among other things: attribute information of the user having the user ID "U01"; a message send button Bn1 for accepting a send request to send a message to the user having the user ID "U01"; a stamp send button Bn2 for accepting a send request to send a message to the user having the user ID "U01"; and a display button Bn3 for accepting a display request to display an advertisement or coupon corresponding to the group having the group ID "G01". As a result, the user of the terminal device 200b can send the desired message or image to the user of the terminal device 200a via the server 300, in the same way as the user of the terminal device 200a. Furthermore, the user of the terminal device 200b can appropriately check the advertisement or coupon corresponding to the group having the group ID "G01".

As described above, the matching system 10 enables users having similar smoking characteristics to be grouped together, and enables communication among grouped users by utilizing the matching system 10. This makes it possible to promote communication among users of inhalation devices 100.

For example, recent years have seen fewer opportunities for smokers to communicate with each other because there are fewer places where smoking is allowed in public spaces, etc. In contrast to this, the matching system 10 enables communication among users of inhalation devices 100, and can provide the users with the enjoyment of communication. Users can therefore be provided with a high-quality experience, thus making it possible to improve user satisfaction with the inhalation device 100.

Furthermore, the matching system 10 is capable of distributing advertisements or coupons that take account of user smoking characteristics to each group of users having similar smoking characteristics, enabling the manufacturer of inhalation devices 100, etc. to implement effective promotional activities that take account of smoking characteristics of each user.

It should be noted that the information processing method described in this embodiment may be realized by a pre-prepared program (information processing program) run on a computer. This information processing program is stored on a computer-readable storage medium and is run by being read out from the storage medium. The information processing program may also be provided in a form stored in a non-volatile (non-transitory) storage medium such as a flash memory, or may be provided over a network such as the Internet. Furthermore, the computer that runs this information processing program was the terminal device 300 (e.g., a CPU constituting the control unit 350) in this embodiment, but is not limited thereto. For example, the computer that runs this information processing program may equally be contained in the inhalation device 100 (e.g., a CPU constituting the control unit 116), or may be contained in the terminal device 200 (e.g., a CPU constituting the control unit 250).

An embodiment of the information processing device, information processing method, and information presentation program according to the present disclosure was described above, but it goes without saying that the present disclosure is not limited to this embodiment. It is obvious that a person skilled in the art will be able to conceive of a number of variant examples or modified examples within the scope disclosed in the claims, and any such variant examples or modified examples are naturally understood to fall within the technical scope of the present disclosure. Furthermore, the components in the embodiments described above may be combined in any way within a scope that does not depart from the essential point of the invention.

For example, in the embodiment described above, the inhalation device 100 sends log information to the corresponding terminal device 200, and the terminal device 200 generates the smoking characteristics information, but this is not limiting. For example, the inhalation device 100 may send log information to the server 300 via the terminal device 200, and the server 300 may generate the smoking characteristics information. Furthermore, the inhalation device 100 may be configured to send the log information directly to the server 300.

Furthermore, when one user and another user have been grouped in the embodiment described above, those users are able to communicate via the server 300, but this is not limiting. For example, when one user and another user have been grouped, the server 300 may, subject to the agreement of each user, notify the social networking service (SNS) account of each user to the other, so that said one user and said other user are able to communicate without the intermediary of the server 300.

Furthermore, in the embodiment above, advertisements or coupons that take account of user smoking characteristics can be distributed to each group of users having similar smoking characteristics, but this is not limiting. For example, the server 300 may group together a specific user (such as an influencer) with other users having smoking characteristics similar to that specific user, and distribute or provide advertisements and coupons, points, or predetermined articles, etc. to said other users. It should be noted that, in this case, communication via the server 300 may or may not be possible between the specific user and the other users.

Furthermore, the smoking characteristics information is not limited to what is shown in fig. 5. For example, the smoking characteristics information may be information obtained by making user smoking characteristics more visible using color or shading.

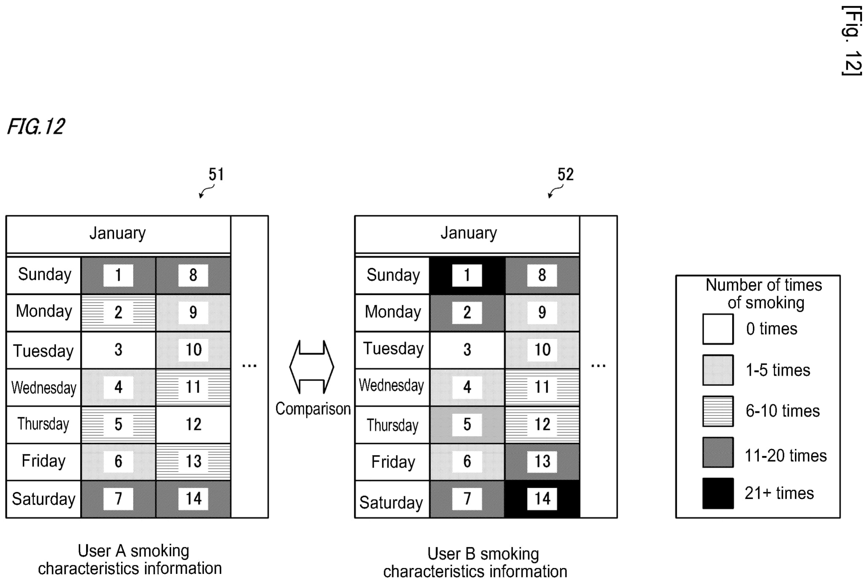

Fig. 12 shows another example of the smoking characteristics information. The smoking characteristics information may be information showing an image in which columns for each day on a calendar are colored by a color or shading corresponding to the number of times of smoking on that day, as with the smoking characteristics information 51, 52 shown in fig. 12. In such a case, the server 300 may use image processing to compare an image showing smoking characteristics information of one user (e.g., the smoking characteristics information 51 of user A shown in fig. 12) with an image showing smoking characteristics information of another user (e.g., the smoking characteristics information 52 of user B shown in fig. 12), and thereby calculate the similarity between images. Furthermore, in such a case, the server 300 may present one user with the smoking characteristics information of another user, as the information relating to the other user, for example.

Furthermore, the embodiment above described an example in which the information processing device of the present disclosure is realized by means of the server 300, but this is not limiting. For example, the information processing device of the present disclosure may equally be realized by means of the terminal device 200 which is capable of communicating with the inhalation device 100 and the server 300. In this case, the control unit 250 of the terminal device 200 described above may calculate the similarity by appropriately acquiring the necessary information from the inhalation device 100 and the server 300, and transfer processing results to the server 300.

The present specification, etc. sets forth at least the following features. Corresponding components, etc. in the embodiments described above are shown by way of example in parentheses, but there is no limitation to such components.
(1) An information processing device (server 300) comprising a control unit (control unit 350) for performing processing to: acquire smoking characteristics information indicating smoking characteristics of respective users of a plurality of inhalation devices (inhalation devices 100, 100A, 100B) each configured to be capable of generating an aerosol,
   calculate a similarity relating to the smoking characteristics between a user of one of the plurality of inhalation devices and a user of another inhalation device, based on the smoking characteristics information, and
   group together the user of said one inhalation device and the user of said other inhalation device, based on the similarity.

According to (1), a user of one inhalation device and a user of another inhalation device can be grouped together based on a similarity relating to smoking characteristics of the user of said one inhalation device and the user of said other inhalation device. This allows users having similar smoking characteristics to be grouped together.

(2) The information processing device as disclosed in (1), wherein
the control unit performs further processing to present the user of said one inhalation device with group information relating to a group to which the user of said one inhalation device and the user of said other inhalation device belong, when the user of said one inhalation device and the user of said other inhalation device have been grouped together.

According to (2), a user of one inhalation device can be presented with group information relating to the group to which said user belongs.

(3) The information processing device as disclosed in (2), wherein
the group information includes information relating to the user of said other inhalation device.

According to (3), a user of one inhalation device can be presented with information relating to a user of another inhalation device who has similar smoking characteristics.

(4) The information processing device as disclosed in (3), wherein
the information relating to the user of said other inhalation device includes attribute information representing attributes of the user of said other inhalation device.

According to (4), a user of one inhalation device can be presented with attribute information of a user of another inhalation device who has similar smoking characteristics.

(5) The information processing device as disclosed in (3) or (4), wherein
the information relating to the user of said other inhalation device includes information for the user of said one inhalation device to accept a send request to send a message or an image to the user of said other inhalation device.

According to (5), the user of said one inhalation device can accept a send request to send a message or an image to the user of said other inhalation device.

(6) The information processing device as disclosed in any of (2) to (5), wherein
the group information includes information relating to an advertisement or coupon corresponding to the group.

According to (6), a user of one inhalation device can be presented with an advertisement or coupon corresponding to the group to which said user belongs.

(7) The information processing device as disclosed in any of (1) to (6), wherein
the smoking characteristics information includes information indicating a number of times of smoking in a predetermined period.

According to (7), a user of one inhalation device and a user of another inhalation device can be grouped together according to a similarity based on a number of times of smoking of the user of said one inhalation device in a predetermined period and a number of times of smoking of the user of said other inhalation device in the predetermined period.

(8) The information processing device as disclosed in (7), wherein
the similarity is an evaluation value representing proximity of the number of times of smoking of the user of said one inhalation device in the predetermined period and the number of times of smoking of the user of said other inhalation device in the predetermined period.

According to (8), users having close numbers of times of smoking in a predetermined period can be grouped together.

(9) The information processing device as disclosed in any of (1) to (8), wherein
the control unit:
identifies a user of said other inhalation device having attribute information in common with a user of said one inhalation device by referring to a memory unit for storing attribute information of respective users of the plurality of inhalation devices, and
calculates the similarity between the user of said one inhalation device and the user of said other inhalation device which has been identified.

According to (9), it is possible to group together users having common attribute information and similar smoking characteristics.

(10) The information processing device as disclosed in (9), wherein
the attribute information includes information indicating the gender, age or area of residence of the user.

According to (10), groups can be formed which also take account of gender, age, or area of residence.

(11) An information processing method in which a computer (server 300) performs processing to:
acquire smoking characteristics information indicating smoking characteristics of respective users of a plurality of inhalation devices each configured to be capable of generating an aerosol (step S4),
calculate a similarity relating to the smoking characteristics between a user of one of the plurality of inhalation devices and a user of another inhalation device, based on the smoking characteristics information (step S44), and
group together the user of said one inhalation device and the user of said other inhalation device, based on the similarity (step S45, step S46).

According to (11), a user of one inhalation device and a user of another inhalation device can be grouped together based on a similarity relating to smoking characteristics of the user of said one inhalation device and the user of said other inhalation device. This allows users having similar smoking characteristics to be grouped together.

(12) An information processing program which causes a computer (server 300) to implement processing to:
acquire smoking characteristics information indicating smoking characteristics of respective users of a plurality of inhalation devices each configured to be capable of generating an aerosol (step S4),
calculate a similarity relating to the smoking characteristics between a user of one of the plurality of inhalation devices and a user of another inhalation device, based on the smoking characteristics information (step S44), and
group together the user of said one inhalation device and the user of said other inhalation device, based on the similarity (step S45, step S46).

According to (12), a user of one inhalation device and a user of another inhalation device can be grouped together based on a similarity relating to smoking characteristics of the user of said one inhalation device and the user of said other inhalation device. This allows users having similar smoking characteristics to be grouped together.

(13) A computer-readable storage medium (memory unit 310) for storing the information processing program as disclosed in (12).

According to (13), it is possible to cause a computer to implement the information processing program as disclosed in (12).

### REFERENCE SIGNS LIST

100, 100A, 100B Inhalation device
300 Server (information processing device)
350 Control unit

## Claims

1. An information processing device comprising a control unit for performing processing to:
acquire smoking characteristics information indicating smoking characteristics of respective users of a plurality of inhalation devices each configured to be capable of generating an aerosol, calculate a similarity relating to the smoking characteristics between a user of one of the plurality of inhalation devices and a user of another inhalation device, based on the smoking characteristics information, and
group together the user of said one inhalation device and the user of said other inhalation device, based on the similarity.

2. The information processing device as claimed in claim 1, wherein
the control unit performs further processing to present the user of said one inhalation device with group information relating to a group to which the user of said one inhalation device and
the user of said other inhalation device belong, when the user of said one inhalation device and the user of said other inhalation device have been grouped together.

3. The information processing device as claimed in claim 2, wherein
the group information includes information relating to the user of said other inhalation device.

4. The information processing device as claimed in claim 3, wherein
the information relating to the user of said other inhalation device includes attribute information representing attributes of the user of said other inhalation device.

5. The information processing device as claimed in claim 3 or 4, wherein
the information relating to the user of said other inhalation device includes information for the user of said one inhalation device to accept a send request to send a message or an image to the user of said other inhalation device.

6. The information processing device as claimed in any one of claims 2 to 5, wherein
the group information includes information relating to an advertisement or coupon corresponding to the group.

7. The information processing device as claimed in any one of claims 1 to 6, wherein
the smoking characteristics information includes information indicating a number of times of smoking in a predetermined period.

8. The information processing device as claimed in claim 7, wherein
the similarity is an evaluation value representing proximity of the number of times of smoking of the user of said one inhalation device in the predetermined period and the number of times of smoking of the user of said other inhalation device in the predetermined period.

9. The information processing device as claimed in any one of claims 1 to 8, wherein the control unit:
identifies a user of said other inhalation device having attribute information in common with a user of said one inhalation device by referring to a memory unit for storing attribute information of respective users of the plurality of inhalation devices, and
calculates the similarity between the user of said one inhalation device and the user of said other inhalation device which has been identified.

10. The information processing device as claimed in claim 9, wherein
the attribute information includes information indicating the gender, age or area of residence of the user.

11. An information processing method in which a computer performs processing to:
acquire smoking characteristics information indicating smoking characteristics of respective users of a plurality of inhalation devices each configured to be capable of generating an aerosol, calculate a similarity relating to the smoking characteristics between a user of one of the plurality of inhalation devices and a user of another inhalation device, based on the smoking characteristics information, and
group together the user of said one inhalation device and the user of said other inhalation device, based on the similarity.

12. An information processing program which causes a computer to implement processing to:
acquire smoking characteristics information indicating smoking characteristics of respective users of a plurality of inhalation devices each configured to be capable of generating an aerosol, calculate a similarity relating to the smoking characteristics between a user of one of the plurality of inhalation devices and a user of another inhalation device, based on the smoking characteristics information, and
group together the user of said one inhalation device and the user of said other inhalation device, based on the similarity.
